# EUROPEAN PATENT APPLICATION

(11) **EP 2 891 678 A1**
(43) Date of publication of application: **08.07.2015**
(21) Application number: 15152733.0
(22) Date of filing: 22.04.2010
(51) Int. Cl.: C08J 9/34, C08J 9/00, C08J 9/12, C08K 3/26

(54) **MASTER BATCH CONCENTRATE FOR USE IN FOAMING A FLUOROPOLYMER**

(30) Priority: 01.05.2009 US 174745 P
(62) Divisional of application: 10770145.0
(71) Applicant: Arkema, Inc., King of Prussia, PA 19406 (US)
(72) Inventor: Zerafati, Saeid, VILLANOVA, PA Pennsylvania 19085 (US); Stabler, Sean M., MONTOURSVILLE, PA Pennsylvania 17754 (US)
(74) Representative: Albani, Dalila

(57) **Abstract**

The invention relates to a foamed fluoropolymer, preferably a polyvinylidene fluoride (PVDF) structure, such as from Kynar^{®} resins. The foamed structure is continuous self-supporting, sized, and has a dense skin. The foamed structure is manufactured in a process using foaming agents and nucleating agents. The structure is sized into a specific shape during the manufacturing process - requiring a good melt viscosity of the PVDF foam. In one process, a master batch containing the nucleating agent is used. The foamed article could be a sheet, film, profile, tube, pipe, article, rod foam-core structure, or other self-supporting shape. Foamed tubes, pipes, rods, sheets and conduit are especially useful. The foamed structure of the invention provides added value by being lighter weight, more flexible, and more impact resistant than a comparable non-foamed PVDF structure. It also has increased hysteresis, increased insulation properties, reduced dielectric constant, and increased compressibility.

## Description

### FIELD OF THE INVENTION

The invention relates to a foamed fluoropolymer, preferably a polyvinylidene fluoride (PVDF), structure that is self-supporting, sized, and has a dense skin. The foamed structure is manufactured in a process using foaming agents and nucleating agents. The structure is sized into a specific shape during the manufacturing process - requiring a good melt viscosity of the PVDF foam. In one process, a master batch containing the nucleating agent is used. The foamed article could be a sheet, film, profile, tube, pipe, or other self-supporting shape or article. Foamed tubes, pipes and conduit are especially useful.

### BACKGROUND OF THE INVENTION

Fluoropolymers, and polyvinylidene fluoride in particular, possess many favorable physical properties that make them the material of choice in many applications. Polyvinylidene fluoride (PVDF) has a marked toughness and high elasticity, and has a high chemical, weathering, permeation and flammability resistance. It is widely used in both coating and melt-processable applications. Unfortunately PVDF has a relatively high density, and can be more expensive than other more commodity polymer resins.

There is a desire to reduce the density and reduce the cost of PVDF, with little or no decrease in its excellent physical and chemical properties.

One method to reduce the density of PVDF is through formation of a PVDF foam. Unfortunately, poor melt strength and difficulty in controlling the cell formation in the molten state has generally limited the foaming of PVDF to either a batch process, foaming with support, or some exotic process such as latex freezing. In the batch process, solid PVDF is formed first, typically into a film through extrusion, cross linked through radiation, soaked in a gas under pressure for extended amount of time and then foamed at higher temperature typically into a slab. It is impossible to make hollow or long articles, such as pipes, with solid skins using this method. In the supported foam technique, in order to overcome the poor melt strength, foamed polymer is extruded on or around a carrier or wire to prevent it from collapsing. The foam extruded in this case would not be able to hold its own without the support of a carrier, especially in large size applications. Therefore, it is not possible to size the product or create a hollow freestanding profile. As the result, this technology is only limited to making PVDF wire coating.

One means to overcome the melt strength issue and reduce cost is to form a PVDF alloy with other polymers, such as acrylics in order to reduce the crystallinity and improve the foaming process. Unfortunately this compromises the advantageous properties of the PVDF foam, especially those related to high crystallinity.

US 4,781,433 describes foamed PVDF jackets for fiber optical cable. The PVDF is formed using a blowing agent concentrate to produce an expanded PVDF that is extruded directly onto a moving wire. The PVDF foam is neither sized nor self-supporting.

US 7,081,216 describes the formation of a PVDF foam by freezing a PVDF emulsion followed by thawing. This process is not useful for producing hollow or long and thin articles with solid skins.

WO 08/137393 describes foamed PVDF tubular articles useful as conduit. Sizing, melt viscosity and nucleating agents are not described

Applicants have now surprisingly found that useful self-supporting foamed fluoropolymers, and in particular PVDF, structures having solid skins can be formed in a continuous manufacturing process. In order to produce a sized structure having a dense skin layer the foam needs a high melt viscosity, not seen in the art. Nucleating agents are also required for good, homogeneous foam formation.

### SUMMARY OF THE INVENTION

The invention relates to a self-supporting fluoropolymer, preferably polyvinylidene fluoride (PVDF), foamed structure comprising;
a) 60-99.99 percent by weight fluoropolymer, preferably PVDF;
b) 0.01 to 5 percent by weight of residual nucleating agent; (0.1 - 2) wherein said foamed structure has a density that is at least 3% less than said fluoropolymer of a) that is unfoamed; wherein said structure has been sized; and
wherein said structure has a dense skin that is at least 2 microns thick, and wherein said skin contains an average of less than 20 voids per 1 mm².

The invention further relates to a master batch concentrate for use in foaming fluoropolymers, particularly polyvinylidene fluoride comprising:
a) 5 to 99.99 weight percent of a carrier resin, having a melting temperature of 50 - 175°C or a Tg of from 50 - 110°C;
b) 0.01 to 95 weight percent of one or more nucleating agents based on the total polymer solids; and
c) optionally from 0.01 to 95 weight percent of one or more other additives.

The invention further relates to a process for the production of a sized fluoropolymer, and particularly a polyvinylidene fluoride, foam comprising the steps of:
a) forming one or more master batch concentrate(s) comprising a carrier resin and from 0.01 to 95% by weight of one or more nucleating agent based on all polymer solids;
b) blending said master batch concentrate(s) with a fluoropolymer, preferably a polyvinylidene fluoride, resin at from 0.1 to 95 weight percent master batch to 5 to 99.9 weight percent fluoropolymer to form a homogeneous fluoropolymer/master batch blend;
c) processing the fluoropolymer/master batch blend through an extruder to produce a homogeneous mixture of fluoropolymer, gas, and the components of the master batch;
d) cooling the fluoropolymer /gas mixture in the extruder end, adapter, and/or die
e) extruding or injecting the fluoropolymer /gas mixture from the extruder to form a fluoropolymer foam; and
f) passing the fluoropolymer foam through a sizer to form a shaped fluoropolymer foam structure having a dense skin; and
g) cooling the resulting structure; and
optionally cutting the resulting cooled structure to a desired size.

### BRIEF DESRIPTION OF THE DRAWINGS

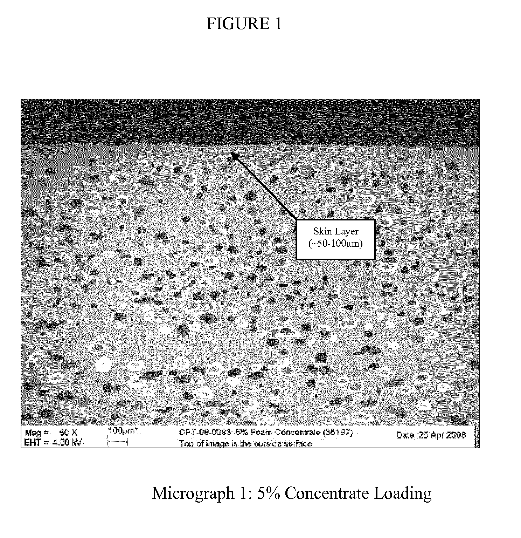

Figure 1 is a micrograph of the polyvinylidene foam of the invention, showing excellent cell structure and a dense skin.

### DETAILED DESCRIPTION OF THE INVENTION

The invention relates to a foam produced from a fluoropolymer using a nucleating agent and blowing agent that is then sized to produce a self-supporting fluoropolymer foam structure having a dense skin. Preferably the fluoropolymer is polyvinylidene fluoride (PVDF).

By "self-supporting" as used herein in relation to the foamed structure is meant: a) for all structures, the foam of the invention can be pulled from the die without rupture of the foam, b) for all structures the foam does not require any internal or external support for the foam to be sized, and c) in the case of a pipe or tube, the pipe or tube will not collapse, but the inside opening will remain. A reinforcing element, such as a wire, could be present within the foamed structure, but its presence is not needed to produce the sized foam.

### Fluoropolymer

The fluoropolymers of the invention include, but are not limited to polymers containing at least 50 weight percent of one or more fluoromonomers. The term "fluoromonomer" as used according to the invention means a fluorinated and olefinically unsaturated monomer capable of undergoing free radical polymerization reaction. Suitable exemplary fluoromonomers for use according to the invention include, but are not limited to, vinylidene fluoride, vinyl fluoride, trifluoroethylene, tetrafluoroethylene (TFE), ethylene tetrafluoroethylene, and hexafluoropropylene (HFP) and their respected copolymers. Preferred fluoropolymers are a polyvinylidene fluoride homopolymer or copolymer, chlorotrifluoroethylene (CTFE), perfluorinated ethylene-propylene copolymer (EFEP), and polytetrafluoroethylene homopolymer or copolymers. Fluoro-terpolymers are also contemplated, including terpolymers such as those having tetrafluoroethylene, hexafluoropropene and vinylidene fluoride monomer units. Most preferably the fluoropolymer is a polyvinylidene fluoride (PVDF). The invention will be exemplified in terms of PVDF, but one of ordinary skill in the art will recognize that other fluoropolymers could be represented where the term PVDF is exemplified.

The polyvinylidene fluoride (PVDF) of the invention is PVDF homopolymer, copolymer or polymer alloy. Polyvinylidene fluoride polymers of the invention include the homopolymer made by polymerizing vinylidene fluoride (VDF), and copolymers, terpolymers and higher polymers of vinylidene fluoride, where the vinylidene fluoride units comprise greater than 51 percent by weight, preferably 70 percent of the total weight of all the monomer units in the polymer, and more preferably, comprise greater than 75 percent of the total weight of the monomer units. Copolymers, terpolymers and higher polymers (generally referred to herein as "copolymers") of vinylidene fluoride may be made by reacting vinylidene fluoride with one or more monomers from the group consisting of vinyl fluoride, trifluoroethene, tetrafluoroethene, one or more of partly or fully fluorinated alphaolefins such as 3,3,3-trifluoro-1-propene, 1,2,3,3,3-pentafluoropropene, 3,3,3,4,4-pentafluoro-1-butene, and hexafluoropropene, the partly fluorinated olefin hexafluoroisobutylene, perfluorinated vinyl ethers, such as perfluoromethyl vinyl ether, perfluoroethyl vinyl ether, perfluoro-n-propyl vinyl ether, and perfluoro-2-propoxypropyl vinyl ether, fluorinated dioxoles, such as perfluoro(1,3-dioxole) and perfluoro(2,2-dimethyl-1,3-dioxole), allylic, partly fluorinated allylic, or fluorinated allylic monomers, such as 2-hydroxyethyl allyl ether or 3-allyloxypropanediol, and ethene or propene. Preferred copolymers or terpolymers are formed with vinyl fluoride, trifluoroethene, tetrafluoroethene (TFE), and hexafluoropropene (HFP).

Preferred copolymers include those comprising from about 60 to about 99 weight percent VDF, and correspondingly from about 1 to about 40 percent HFP; copolymers of VDF and CTFE; terpolymers of VDF/HFP/TFE; and copolymers of VDF and EFEP

The PVDF of the invention could also be an alloy of PVDF and a miscible, semi-miscible, or compatible polymer. Since most alloys of PVDF result in some diminishment of the PVDF properties, a preferred PVDF is one that is not an alloy. However, small amounts of other polymer, up to 25 percent of the total PVDF polymer alloy may be added. Other fluoropolymers (such as polyvinyl fluoride and PTFE), TPU and (meth)acrylic polymers are examples of useful polymers that may make up a useful polymer alloy.

### Blowing agents

Blowing agents useful in the invention can be either chemical or physical blowing agents, or a mixture thereof. In the case of a chemical blowing agent, the gas is created by decomposition of a chemical heated above its degradation temperature. In the case of the physical blowing agent, gas is introduced into the polymer either directly or through evaporating a liquid foaming agent by heating it above its evaporation temperature. Chemical blowing agents are mainly used for higher density foams - down to 70% density reduction, while physical blowing agents can produce light foams - upwards of 10X density reduction.

The chemical blowing agent can be a solid or fluid. Useful blowing agents include, but are not limited to, azodicarbonamide, azodiisobutyronitile, sulfonylsemicarbazide, 4,4-oxybenzene, barium azodicarboxylate, 5-Phenyltetrazole, p-toluenesulfonylsemicarbazide, diisopropyl hydrazodicarboxylate, 4,4'-oxybis(benzenesulfonylhydrazide), diphenylsulfone-3,3'-disulfohydrazide, isatoic anhydride, N,N'-dimethyl-N,N'dinitroterephthalamide, citric acid, sodium bicarbonate, monosodium citrate, anhydrous citric acid, trihydrazinotriazine, N,N'-dinitroso-pentamethylenetetramine, and p-toluenesulfonylhydrazide, or include a blend two or more of said blowing agents. Mixtures of blowing agents are also contemplated by the invention.

### Nucleating agents

The foam of the invention is formed using a nucleating agent that aids in producing a homogeneous foam. The use of nucleating agents is preferred when a chemical blowing agent is used and is necessary for forming a controlled foam with physical blowing agents. A mixture of two or more nucleating agents can be used. Useful nucleating agents include, but are not limited to calcium carbonate, calcium sulfate, magnesium hydroxide, magnesium silicate hydroxide, calcium tungstate, magnesium oxide, lead oxide, barium oxide, titanium dioxide, zinc oxide, antimony oxide, boron nitride, magnesium carbonate, lead carbonate, zinc carbonate, barium carbonate, calcium silicate, aluminosilicate, carbon black, graphite, non organic pigments, alumina, molybdenum disulfide, zinc stearate, PTFE particles, immiscible polymer particles, and calcium metasilicate. A preferred nucleating agent is calcium carbonate. Nucleating agents that have smaller particle size, and have rougher surfaces are preferred.

### Additives

In addition to a blowing agent and nucleating agent, the PVDF of the invention may also contain other additives typically added to PVDF formulations, including but not limited to impact modifiers, UV stabilizers, plasticizers, fillers, coloring agents, pigments, dyes, antioxidants, antistatic agents, surfactants, toner, pigments, and dispersing aids.

### Manufacturing process

The sized PVDF foamed structures of the invention are formed by an extrusion mixing process followed by a sizing operation. The foam is produced by decomposing one or more chemical blowing agents in the extruder to form gas, or by directly injecting gas or liquid foaming agent into the molten polymer in the extruder. The extruded foam then passes through a sizer or other device to form structures of the final shape and dimensions having a dense skin. The foamed articles are manufactured as a free-standing structure and don't need a carrier such as wire or core to prevent the foam from collapsing. It has been found that the PVDF foam structures of the invention are produced through the use of specific ranges of polymer viscosity, processing temperature, blowing agent loading, nucleating agent loading and sizing conditions.

In general, foaming of crystalline and semi-crystalline polymers is much harder than foaming amorphous polymers, mainly due to the sharp change in their viscosity when going through the melting point and also their low melt strength. The present invention can produce foamed polymer structures of crystalline PVDF, semi-crystalline PVDF, and amorphous PVDF polymers and copolymer.

The process for foam production using a chemical blowing agent is usually performed in an extruder. By "extruder" as used herein is meant a thermoforming device in which a homogeneous mixture of the polymer, blowing agent, and nucleating agent exits as a foam. Useful extruders of the invention include, but are not limited to single and double screw extruders, blow molding devices, and injection molding devices. In the case of an single or double screw extruder producing a film, sheet, profile, tube, pipe, or rod, the process of extrusion and sizing is a continuous process. In blow molding and injection molding the process is non-continuous, and results in an article of a part for an article. The polymer is heated inside the extruder above its melting point in the presence of foaming and nucleating agents. When a chemical foaming agent is used, the temperature is raised above the decomposition temperature of the foaming agent, generating gas which is then absorbed by the molten polymer under high pressure. Alternately, gas or fluid can be injected into the molten polymer. Gasses are excellent plasticizers for polymers. In the case of crystalline polymers, inclusion of gas would substantially reduce both the melting temperature and the viscosity of the polymer. The resultant mixture has very low melt strength and low viscosity and is not suitable for foaming since the low melt strength of the molten mixture would prevent the draw down necessary for sizing the product and result in the rupture of the melt before reaching the sizing device or even in the sizing device. Further, such low viscosity could cause stability problems resulting in non-uniform, large and sometimes collapsed cells.

Applicant has found that the problem of low viscosity and low melt-strength can be overcome by cooling the polymer/gas mixture before exiting the die. In this way, the viscosity and melt strength increase and the foam formed is stable and has sufficient drawability.

A key to the good foam of the present invention is the use of manufacturing conditions in which enough heat is generated in the extruder to melt the polymer and decompose the foaming agent, and then cooling down the generated polymer/gas mixture in a later stage to increase the melt viscosity. The extruder, adaptor and die temperature profiles must be selected carefully to create these conditions. The pressure at the end of the extruder, melt temperature and the die profile are also important parameters to control.

Ideally, the polymer/gas mixture has sufficient melt strength and viscosity when it exits the die and is exposed to the atmospheric pressure. At this point, the gas dissolved in the polymer comes out of solution and generates gas cells in the polymer. These cells grow until the gas in the polymer is depleted and the polymer is further cooled down, resisting further expansion. The foam expansion ceases once there is a balance between the gas pressure in the bubble and the extensional viscosity of the polymer melt. The foam is then ready to go to the sizer.

In one embodiment of the invention, a foam-core pipe, rod or other structure is formed. In this process, a solid PVDF skin is coextruded on the outside (and inside for a pipe or tube) of the extruded PVDF foam. The PVDF skin layer may have the same or different composition as the foam core.

### Sizing

"Sized" or "sizing", as used herein, means a manufacturing process in which the PVDF foam, undergoes a forming, calibrating and cooling operation in which the foam is compressed to some degree, yielding a specific structure with tight tolerances, and a dense skin.

In the case of pipes, tubes, profiles, the sizing typically occurs in sizing or vacuum tanks with or without sizer rings, with or without water or water spray, and with or without vacuum. Sizing can also occur, for corrugated pipe or tube by a corrugator, and for sheet or film sizing can be performed by the use of a three-roll stack or similar process. Sizing for injection molding parts can occur in the mold. Each of these processes produces a structure having controlled tolerances and a dense skin.

The dense skin has a thickness of more than 2 microns, preferably more than 10 microns, more preferably more than 20 microns and could be as high as 30, 40 and even 50 microns. In some applications a thicker skin is desired, and can be formed in the sizing process. The dense skin may occasionally contain a foam cell, which does not harm the benefits of the solid skin. The dense solid skin of the invention may contain an average of 20 or less foam cells within a 1x1 mm area of the skin, and preferably less than 9 foam cells per 1 mm².

### Master batch

In a preferred embodiment of the invention, the PVDF foamed structure is produced using one or more master batch concentrate(s) containing the nucleating agent, at least one blowing agent in the case where a chemical blowing agent is used, and optional other additives, in a suitable carrier. The purpose of the master batch is to provide a more precise addition of ingredients used at low level, and to do so in a manner providing excellent homogeneous mixing of components within the PVDF, leading to homogeneous foam formation. Moreover, the additives are usually in the form of fine powders that need to be added to the polymer pellets and would phase separate in the extruder hopper.

The master batch contains a high concentration of the required additives in the final product (sometimes 10 to 50 times more). The master batch is then generally mixed with the PVDF pellets in a dry blend form and introduced in the extruder hopper. This process is called letting down the concentrate. In the let down process, depending on the concentration of the additives in the master batch and also the required amount of the additives in the final product, anything between several percent to sometimes over 50% of the master batch concentrate is added to the polymer resin.

It is possible to have multiple master batches, each containing one or more of the additives to be mixed into the PVDF. One advantage of multiple master batches would be that a manufacturer could adjust the ratio of the additives at the point of manufacture. An example of multiple master batches would be a first master batch containing a nucleating agent, and a second master batch containing a blowing agent.

### PVDF foam manufacture using a master batch

The process steps for forming the foam of the invention using a master batch are as follows:
a) forming one or more master batch concentrate(s) each containing a carrier resin, with one or more of the following: blowing agent, nucleating agent, and/or other additives;
b) blending said master batch concentrate with a fluoropolymer (preferably polyvinylidene fluoride) resin to form a homogeneous fluoropolymer /master batch blend;
c) processing the fluoropolymer /master batch blend through an extruder, where homogeneous dispersion of the components of the master batch(s) occurs and the blowing agent is activated, to produce a homogeneous fluoropolymer mixture of fluoropolymer, gas, nucleating agents and the components of the master batch;
d) cooling said fluoropolymer mixture in the end of the extruder, adapter and/or die;
e) extruding or injecting the fluoropolymer mixture from the extruder to form a fluoropolymer foam;
f) passing the fluoropolymer foam though a sizer to form a shaped fluoropolymer foam structure having a dense skin;
g) cooling the resulting structure; and
h) optionally cutting the resulting cooled fluoropolymer foam structure to a desired size.
Step a) The master batch polymer concentrate is generally prepared in twin screw extruders to maximize the mixture uniformity of the additives in the blend. A poorly mixed concentrate would produce poor product even after the letting down process and going through the extrusion step c). To prepare the concentrate, carrier polymer pellets and additives are added to the extruder hopper usually in separate streams and then melted and mixed inside the extruder and finally pelletized at the end of the extruder. An alternative way would be to prepare a powder mixture of a carrier resin and additives in a batch powder blender and then introduce this powder to the twin screw extruder to be melt blended and pelletized. The advantage of the second method is that some blending can be achieved in the powder form and the dispersion of the additives in the carrier resin would require less effort.

The preparation of the master batch foam concentrate is difficult and requires balancing the decomposition temperature of the foaming agent, the melting temperature of the carrier resin with proper mixing in the extruder. The temperature in the extruder cannot exceed the decomposition temperature of the foaming agent as the effectiveness of the foaming agent would be reduced due to the gas evolution and one would end up with foamed pellets. On the other hand, the carrier polymer needs to be heated above its melting temperature in order to reduce its viscosity to enable good mixing in the extruder. Thus, the decomposition temperature of the foaming agent should be higher than the processing temperature of the carrier polymer. This limits the specific foaming agents that can be used in combination with a specific resin. In some cases, low melting temperature acrylics or waxes are used as the carrier resin to create master batches for foaming agents with lower decomposition temperatures. Further, there are very few polymers that are compatible with PVDF. Some useful carriers include, but are not limited to poly(methyl methacrylate) (PMMA), poly(ethyl methacrylate) (PEMA), poly(methyl acrylate) (PMA), poly(ethyl acrylate) (PEA), poly(vinyl acetate) (PVAc), poly(vinyl methyl ketone) (PVMK), thermoplastic urethanes (TPU) and other (meth)acrylic polymers. In one embodiment PVDF-based carriers are used, as pure PVDF foam is highly desirable for its good chemical and physical properties, and these PVDF foam qualities would be compromised by the addition of an incompatible polymer.

A preferred carrier resin meeting the above requirements is a lower melting point and low viscosity PVDF copolymer, such as PVDF- hexafluoropropene (HFP) copolymer powders. The carrier resin may consist of a blend of two or more different carrier resins. Using the powder form of the carrier reduces the mixing necessary in the extruder while using a low melting temperature-low viscosity carrier resin allows for processing at lower temperature and still achieve good mixing. The melting temperature of the carrier resin could be between 50 and 175°C, preferably between 75 and 150°C, or if the carrier is amorphous it has a Tg of from 50 - 110°C and preferably 60 - 105°C.

The loading of the foaming agent in the master batch is from 0.1 to 95%, preferable from 1 to 50%, and most preferable from 1 to 20%. The loading of the nucleating agent in the master batch is from 0.01 to 95%, preferably from 0.05 to 20%, and most preferably from 0.1 to 5%.

Applicant developed and used a special low shear screw for a twin screw extruder to provide optimum mixing with minimal local shear heating. This technology enables the preparation of PVDF foam concentrates that were not possible using the existing technology. For example a fully fluorinated foam concentrate having foaming agents with decomposition temperatures as low as 130° C or even lower are produced. The low decomposition temperature foaming agent generates a unique composition of gasses suitable for foaming PVDF. An additional advantage of a low decomposition temperature foaming agent is that the extruder in step (c) can be run at a lower temperature during the manufacturing process, using less energy and reducing the level of cooling of the polymer-gas blend in the adaptor and die in step (d). In many cases, efficient cooling in the die, enables us to increase the line speed and reduce the foam density, while retaining the surface and cell quality.

Step b) The master batch can be added to the PVDF resin through dry blend and tumbling in a single screw or twin screw extruder. A twin screw extruder, provides both a dry blend technique, and also possible metered feeding of the master batch and PVDF. The loading of the master batch is from 0.1 to 95% by weight based on the total weight of the master batch and PVDF, preferably from 1 to 50% and most preferably from 5 to 20%. The amount of the foaming agent in the final product depends on its type but typically is in the range of 0.1 to 25% and preferably from 0.2 to 10% based on the total weight of the master batch and PVDF. The amount of the nucleating agent in the final product depends on its particle size and surface roughness but is in the range of 0.01 to 5% and preferably 0.02 to 2% based on the total weight of the master batch and PVDF. PVDF resins with the viscosity of from 4.0 to 55.0 Kpoise at 230 °C and 100 S⁻¹ could be used for this application. The preferred viscosity range is from 15.0 to 55.0 Kpoise, and a more preferred range is from 20.0 to 55.0 Kpoise.

Step c) The temperature and residence time of the PVDF/master batch materials in the extruder should be suitable for the resin and foaming agent combination. If the blowing agent is a gas or fluid, it is injected into the PVDF/master batch at this point. The temperature should be high enough to melt the polymer and decompose the foaming agent if it is a chemical blowing agent, liquid, or solid. Moreover, the residence time of the polymer/foaming agent mix in the extruder should be long enough for absorption of the gasses in the polymer melt. In the single screw extruder, the residence time is controlled by the screw speed and the temperature is controlled by the external heating elements. The inclusion of the gas may be accelerated through using mixing sections at the end of the extruder. However, if there is enough affinity between the polymer and generated gases, the process of absorption can be achieved without the help of the mixing elements. This is even more true for lower density reductions that the concentration of the gas in the polymer does not need to be very high. In the case of the twin screw extruder, the residence time and distribution is controlled by screw design in addition to the screw speed. The temperature is controlled by the amount of shear and also the external heating elements. The use of a twin screw extruder is especially beneficial for higher density reductions due to the excellent mixing possibilities with this type of extruder. Screw elements can be modified to incorporate a large amount of gas in the polymer in a relatively short time. The temperature profile for the extruder should start from less than the melting temperature of the polymer in the first zone and gradually increase to the desired temperature based on the melting temperature of the PVDF and decomposition temperature of the foaming agent. Proper care should be taken not to increase the temperature too fast along the extruder as it might cause the premature degradation of the foaming agent and the generated gas would escape through the hopper of the extruder. Typically, in a four zone extruder, the first zone is 100 °F below the degradation temperature of the foaming agent, the second zone is 50 °F below, the third zone is at 25 °F below the degradation temp of the foaming agent and the fourth zone is at the decomposition temperature. PVDF foam products have been made on a range of machines including 1", 1.5", and 2.5" single screw extruders; and using a range of screws including general purpose screws, barrier screw with Maddock mixing head, and barrier screw with an Egan mixing head. A range of screws with L/D of 20:1 to 27:1, and compression ratios in a range from 3:1 to 4.5:1 has been successfully used to make a variety of PVDF foam according to this invention teaching.

Step d) At the end of the extruder, the polymer/gas mix will have too high of temperature to produce a melt with the proper viscosity and strength. Therefore the mixture is cooled down at the end of the extruder, in the adaptor and/or the die to increase its viscosity before exiting the die. In longer extruders, this cooling process could start at the end of the extruder. In the case of injection molding, the cooling step could be minimal.

An additional advantage of this cooling is that the pressure upstream would increase which in turn prevents premature foaming in the die, sharkskin and poor cell structure. The melt usually needs to be cooled down around 100 °F before exiting the die. This would be 100 to 150 °F below the recommended processing temperature of the resin. In some cases, the temperature of the melt will be below the melting temperature of the resin to achieve the best foam. The melt temperature at the exit of the die is between 50 °F below to 120 °F above the melting temperature of the resin. A preferred range would be between 30 °F below to 80 °F above and the most preferred range is between 20 °F below to 30 °F above the melting temperature of the resin. The mixture of polymer and gas should not be heated above the temperature required to fully decompose the foaming agent during the residence time of the polymer in the extruder. Too high of melt temperature at the end of the extruder would make the necessary cooling step at the adaptor and die very difficult or even impossible. In order to achieve the temperature reduction in a relatively short distance, in some cases cool air needs to be run around or inside the die. PVDF foam products have also been made on cross head spiral mandrel dies, in-line spiral mandrel dies, spider dies, and coat hanger dies.

Step e) With the proper processing conditions and a low level foam concentrate loading, one will see minimal bubble formation as the extrudate exits the die. This extrudate will look somewhat clear and have a very smooth surface finish. Bubble generation will begin after the die exit. With too high a level of foam concentrate the extrudate will over foam immediately causing the melt strength to dramatically decrease and in some cases violent popping will occur as the foam gases escape from the molten material. The extrudate will be very discolored and the surface finish will be extremely rough. Bubble generation will occur inside the die which would cause non-uniform, collapsed or ruptured cells on the surface or inside the articles. With the right amount of foaming concentrate one will see clear material exit the die to approximately 1/16" from the die and then the bubble generation occurring in an organized sequence. The surface finish will be very smooth and the extrudate will swell in a uniform manner. It is important that foaming occurs directly after the die, as this will be the most controlled foam formation.

A good processing condition would result in a clear melt exiting the die. At approximately 1/16" from the die, the foam cells will start to form and the extrudate would start to swell. The process of expansion would stabilize in about 1" to 2" from the die. At this point, the extrudate should have a smooth surface and should not rupture when pulled at the designed line speed. It was found that the required draw down ratio, draw balance and shrinkage of PVDF foam is very similar to solid PVDF. A draw down ratio of 1.1 to 2.0, a draw balance of 0.99 to 1.02 and shrinkage compensation of 3% to 6% would be required for producing PVDF foam with close tolerances. The die swell is a function of the amount of the density reduction and to a great extent dictates the tooling design for a specific final product dimensions. It was also found that the optimum distance between the die lip and the entrance to the calibrator is between about 1" to 2".

Step f) The sizer for the purpose of this patent could be any device that would cool down, shape, form, prevent foam collapse or brings the PVDF foam to the proper size. Examples for these sizers for pipe and tubes could be sizing or vacuum tanks with or without the sizer rings, with or without the water or water spray, with or without vacuum or combination of the above factors. The sizer for the foam PVDF film could be a two or three roll stack with or without calendaring. The sizer for the corrugated pipe could be one of the various types of the corrugator machines. The sizer for the injection molded part could be the mold. As the result of going through the sizer, a properly processed article would have a dense PVDF skin. This skin would give the foamed structure a good surface finish and aid in the mechanical and permeation properties. The cooling intensity in the sizer is one of the main contributors to the skin thickness and surface finish. For example, for sizing the PVDF foam pipes in a vacuum tank, water would rapidly cool the outside surface but is not as effective at cooling the inside of the pipe. As the result, the skin would be thicker on the outside than the inside. With thicker pipes, if the melt temperature is too high, the foaming action on the inside of the pipe will continue well into the vacuum tank and would result in a rough blistery internal surface with ruptured cells. In this case the only solution would be to decrease the melt temperature, reduce the water temperature or reduce the amount of concentrate in the formulation. Typically it was found that a cooling water temperature of 90 °F is good temperature to start from. Water temperature that is too cold could cause chattering on the surface, and a water temperature that is too high could cause an opaque appearance with thin skins. The foamed melt would usually go through a shaping device which is typically attached to the inside of the cooling thank while vacuum is being pulled on the surface of the water in the tank. It was found that a 15' long tank with 32 °C water temperature at 10-20 water vacuum would be sufficient for most hollow articles. The preferred sizer in the tank would be constructed from brass plates with a length between 0.75"-3.5". The distance between these plates could be varied to fit the characteristics of the product being made.

Step g) Following the sizing operation, the sized foam is cooled to room temperature.

Step h) The sized foam structures may be used as they are formed - such as in a blow-molding or injection molding process, or they may optionally be cut into predetermined sizes for final use, as in a continuous pipe or profile process.

### Properties of foam

The final structure would have a dense skin layer providing good mechanical properties and appearance. The foam will contain from 60 to 99.9 weight percent of fluoropolymer (preferably PVDF), 0.01 to 5 weight percent of residual nucleating agent, and optionally contain other additives. The foam has good mechanical stability and load bearing properties would exist for PVDF foamed structures having density reductions down to 50 % of the original density, making them useful as pipes that could hold pressure, or rods or profiles that could carry loads. The foamed structure has a density that is at least 3% less than said non-foamed PVDF, and more preferably at least 25% less. The density reduction could be 35% less, 50% less and even as high as 100 times less dense than the non-foamed PVDF material. The structures are typically joined together or attached to standard couplings or fittings and can be manufactured with a tight tolerance. For example, 4" schedule 40 pipes have an outside diameter of 4.500" with a tolerance of +/- 0.009" and a thickness of 0.251" with a tolerance of +/- 0.016". The foamed PVDF of this invention would have the melt strength to go through sizing and calibration enables one to form and size the PVDF foam structure to such a close tolerances. Moreover, the dense skin generated aids in the mechanical strength.

Preferably, the foam cell size is as small as possible. The cell size could be as small as 1 micron. Generally the cell size is in the range of from 10 to 250 microns, more typically in the range of from 50 to 150 microns.

An advantage of PVDF foamed structures is their increased flexibility. Solid PVDF pipes that could not be put on a reel would be flexible enough in foamed form of the same dimensions to be reeled. In some instances, cutting high modulus non-foamed PVDF parts could cause micro cracks. PVDF foamed structures may be clean cut without any micro crack.

Another advantage of the foamed structure of the invention is an increased impact resistance, increased hysteresis, reduced dielectric constant, and increased compressibility over non-foamed PVDF. The foamed structures also provide increased insulation - both thermal and sound insulation to articles made from the foamed structure.

### Uses

The foamed PVDF structures of the invention could be used in the same applications as their solid counterparts. They would have the advantage of being lighter, saving shipping costs and making handling easier. Since the structures are lighter, they could find application where light weight is important, for example aerospace pipes, conduits and films. Pipes for chemical drainage, fuel transfer, chemical transfer, and plenum conduits are other applications for which the PVDF foam structures could be useful. Foam PVDF films can be used for packaging as well as fuel and chemical storage. Monolayer or multilayer PVDF foam tubes could have applications in automotive, beverage, medical, pharmaceutical and cosmetics industries. The increased compressability makes the foamed structures of the invention more useful as gasketing.

Containers made of the foam of the invention would have good insulation and flame retardancy.

### EXAMPLES

Unless otherwise stated, all percentages are weight percentages, and all molecular weights are weight average molecular weights. Kynar^{®} is a trademark of Arkema Inc..

### Example 1

A 3/8" KYNAR PVDF foam tube with a density of 1.213 g/cc, which is a weight reduction of 32%, was created using the following procedure.

A mixture of 5% master batch of concentrate that consists of 10% small azodicarbonamide chemical foaming agent, 1% nucleating agent with a surface area of 22 m²/g, and 89% KYNAR 2821 base resin, which has a melting point of 140-145°C and melt viscosity of 12.0-20.0 Kpoise, and 95% KYNAR 2800, which has a melting point of 140-145°C and melt viscosity of 23.0-27.0 Kpoise, was prepared.

The screw is a 1.5" diameter general purpose metering screw with a 3:1 compression having a L/D of 26:1.

The pin and die was attached to a two-leg spider die, with a port to allow airflow through the spider leg into the center of the tube. To make 3/8" tubing with a 0.040" wall thickness a die of 0.397" inside diameter and a pin of 0.306" outside diameter was selected. This pin and die will produce a draw balance of 1.021 and a draw down ratio of 1.194. The pin and die are 4.350" long. The base of the pin is 1.150" diameter, the land length is 1.200." The base of the die is 1.750" diameter with 1.200" land length.

For 3/8" tubing a plate sizer of 0.390" with four sizing plates having 0.060" gap between plates and a total height of 0.905" was used. The opening of the sizer has a 1/8" radius machined around the circumference. The sizer material construction is brass. The sizer needs to be over sized due to shrinkage. The temperature profile was set as shown below in Table 1.

**Table 1**

| **Barrel 1 (°F)** | **Barrel 2 (°F)** | **Barrel 3 (°F)** | **Barrel 4 (°F)** | **Die 1 (°F)** | **Die 2 (°F)** | **Die 3 (°F)** |
|---|---|---|---|---|---|---|
| 315 | 355 | 380 | 405 | 330 | 315 | 315 |

The 10' two stage water vacuum cooling tank was set with the water temperature controlled at 90°F. The two-belt puller was set to a line speed of 9.6 ft/min to pull the material.

### Example 2

KYNAR PVDF foam 3/8" tubes were extruded with 0.040" wall by adding 10% master batch with and without nucleating agents to KYNAR 2800 base resin, which has a melting point of 140-145°C and melt viscosity of 23.0-27.0 Kpoise. The nucleating agent master batch was CaCO₃ with surface area of 22 m²/g. The chemical foaming agent in the master batch was large particle size azodicarbonamide. The master batch without nucleating agent had 10% chemical foaming agent and 90% KYNAR 2821, which has a melting point of 140-145°C and melt viscosity of 12.0-20.0 Kpoise. The master batch with the nucleating agent had 1% CaCO₃, 10% chemical foaming agent and 89% KYNAR 2821-10. The materials were processed in a 1.5" single screw extruder with the following process conditions (Table 2)

**Table 2**

| **Barrel 1 (°F)** | **Barrel 2 (°F)** | **Barrel 3 (°F)** | **Barrel 4 (°F)** | **Die (°F)** | **Die 2 (°F)** | **Die (°F)** | **Head Press. (psi)** | **Load (%)** | **Line Speed (ft/min)** | **Water Temp (°F)** | **Ext. Speed (RPM)** |
|---|---|---|---|---|---|---|---|---|---|---|---|
| 315 | 355 | 380 | 405 | 330 | 315 | 315 | 1700 | 56 | 9.6 | 90 | 10.3 |

The study showed that the tubing without nucleating agent had a density of 1.160 g/cc, which is a 35.20% weight reduction. The tubing with the nucleating agent had a density of 0.931 g/cc, which is a 47.99% density reduction. The nucleating agent increased the efficiency of the density reduction by 36% and resulted in a tube with very good surface finish.

### Example 3

A 3/8" tube with 0.035" wall thickness was made using 10% p-toluenesulfonylsemicarbazide chemical foaming agent master batch from ROWA Group USA and 90% KYNAR 2800-00, which has a melting point of 140-145°C and melt viscosity of 23.0-27.0 Kpoise. The materials were processed in a 1.5" single screw extruder at the following processing extruder conditions as shown in Table 3.

**Table 3**

| **Barrel 1 (°F)** | **Barrel 2 (°F)** | **Barrel 3 (°F)** | **Die (°F)** | **Line Speed (ft/min)** | **Water Temp (°F)** | **Ext. Speed (RPM)** |
|---|---|---|---|---|---|---|
| 355 | 375 | 400 | 340 | 8 | 90 | 9-13 |

The barrel zone 4 temperatures were varied. The following properties (Table 4) were observed for the varied temperatures.

**Table 4**

| **Barrel 4 °F** | **Density (g/cc)** | **% Weight Reduction** | **Surface Finish** |
|---|---|---|---|
| 435 | 0.904 | 50% | Rough |
| 415 | 1.382 | 23% | Smooth |
| 405 | 1.524 | 15% | Very Smooth |

### Example 4

A 3/8" tube with 0.040" wall thickness was made. A blend was used of 95% KYNAR 2800, which has a melting point of 140-145°C and melt viscosity of 23.0-27.0 Kpoise, and 5% master batch, which consisted of 1% CaCO₃ from Specialty Minerals with surface area of 22m²/g, 10% small azodicarbonamide from Rowa Group USA, and 89% KYNAR 2821-10, which has a melting point of 140-145°C and melt viscosity of 12.0-20.0 Kpoise. The materials were processed in a 1.5" single screw extruder at the following processing conditions (Table 5).

**Table 5**

| **Die 1 (°F)** | **Die 2 (°F)** | **Die 3 (°F)** | **Line Speed (ft/min)** | **Water Temp (°F)** | **Ext. Speed (RPM)** | **Tank Dist. (in)** | **% Foam Conc.** | **Vac in H2O** |
|---|---|---|---|---|---|---|---|---|
| 330 | 315 | 315 | 11.7 | 90 | 12.2 | 3.0 | 5 | -10 |

The extruder temperatures for the last two barrel zones were varied. The following properties (Table 6) were observed from the change in extruder temperatures.

**Table 6**

| **Barrel 3 (°F)** | **Barrel 4 (°F)** | **Barrel 3 (°FB)** | **Barrel 4 (°F)** | **Density (g/cc)** | **% Weight Reduction** | **Surface Finish** |
|---|---|---|---|---|---|---|
| 315 | 355 | 380 | 400 | 1.38 | 23 | Very Smooth |
| 315 | 355 | 380 | 405 | 1.241 | 31 | Very Smooth |
| 315 | 355 | 385 | 410 | 1.052 | 41 | Smooth |
| 315 | 355 | 390 | 415 | 0.946 | 47 | Smooth |
| 315 | 355 | 395 | 420 | 0.938 | 48 | Rough |

### Example 5

A 3/8" KYNAR PVDF foam tube was made on a 1.5" single screw extruder. A blend was used of 95% KYNAR 2800-00, which has a melting point of 140-145°C and melt viscosity of 23.0-27.0 Kpoise, and 5% master batch comprising of 1% CaCO₃ with surface area of 22m²/g, 10% small azodicarbonamide, and 89% KYNAR 2821, which has a melting point of 140-145°C and melt viscosity of 12.0-20.0 Kpoise. The tube was made using a two-leg spider die to make 3/8" tubing with a 0.040" wall thickness. The die draw balance was 1.021 and draw down ratio was 1.194. The tube was calibrated using a 0.390" brass plate sizer and two-stage water vacuum tank. Below (Table 7) are the processing conditions.

**Table 7**

| **Barrel 1 (°F)** | **Barrel 2 (°F)** | **Barrel 3 (°F)** | **Barrel 4 (°F)** | **Die 1 (°F)** | **Die 2 (°F)** | **Die 3 (°F)** | **Head Press. (psi)** | **Load (%)** | **Line Speed (ft/min)** | **Water Temp (°F)** | **Ext. Speed (RPM)** | **Tank Dist. (in)** | **Vac in H2O** |
|---|---|---|---|---|---|---|---|---|---|---|---|---|---|
| 315 | 355 | 380 | 405 | 330 | 315 | 315 | 1720 | 51 | 9.6 | 90 | 11.8 | 1.5 | -10 |

The tube had a density of 1.213 g/cc, which is a 32% weight reduction, with very good surface finish.

### Example 6

KYNAR PVDF foam film was made on a 1" single screw extruder. A blend was used of 95% KYNAR 2800, which has a melting point of 140-145°C and melt viscosity of 23.0-27.0 Kpoise, and 5% master batch comprising of 1% CaCO₃ with surface area of 22m²/g, 10% small azodicarbonamide, and 89% KYNAR 2821-10, which has a melting point of 140-145°C and melt viscosity of 12.0-20.0 Kpoise. The film was extruded through a cast film coat hanger die, with 8" width, 1" die lip land length and optimized for less than 10 mil film thickness, the foam film was 5.75" wide and 0.015" thick. The film traveled through a three-roll stack and was rolled up. Below (Table 8) are the processing conditions.

**Table 8**

| **Barrel 1 (°F)** | **Barrel 2 (°F)** | **Barrel 3 (°F)** | **Adapter (°F)** | **Die 1 (°F)** | **Die 2 (°F)** | **Die 3 (°F)** | **Head Press. (psi)** | **Load (amps)** | **Line Speed (ft/min)** | **Water Temp (°F)** | **Ext. Speed (RPM)** |
|---|---|---|---|---|---|---|---|---|---|---|---|
| 315 | 380 | 410 | 315 | 315 | 315 | 315 | 2000 | 3 | 2.9 | 100 | 40 |

The film had a density of 1.2841 g/cc, which is a 28% weight reduction.

### Example 7

Different blowing agents were evaluated by making rod on a 1.5" single screw extruder using a strand die. The strand die is 4.00" in length with 0.125" inside diameters and with 1.5" opening diameter and 0.500" land length. The master batch of concentrate consists of 10% chemical foaming agent, 1% nucleating agent, and 89% KYNAR 2821 base resin, which has a melting point of 140-145°C and melt viscosity of 12.0-20.0 Kpoise. Each of these ratios is measured out by weight. The nucleating agent was CaCO₃ with surface area of 22 m²/g. This master batch is referred to as foam concentrate. The foam concentrate is then added by % weight to KYNAR 2800 resin, which has a melting point of 140-145°C and melt viscosity of 23.0-27.0 Kpoise.

The temperature profiles varied due to different decomposition temperatures of each chemical foaming agent. Table 9 below describes each chemical foaming agent, and the resulting density reductions.

**Table 9**

| **Provider** | **Chemical** | **Grade** | **Conc. Loading** | **Density (g/cc)** | **Density Reducti on** |
|---|---|---|---|---|---|
| Rowa Group USA | Azodicarbonamide | Large Particle Size | 5% | 0.875 | 51% |
| Rowa Group USA | Azodicarbonamide | Small Particle Size | 5% | 0.923 | 48% |
| Rowa Group USA | 5-Phenyltetrazole | IM 2240 | 5% | 0.83 | 54% |
| Chemtura | 5-Phenyltetrazole | Expandex 5-PT | 5% | 0.736 | 59% |
| Chemtura | p-toluenesulfonylsemicarbazide | Celogen RA | 5% | 0.708 | 60% |

Table 10 below shows the temperature profiles used to achieve the densities listed in the above table.

**Table 10**

| **Provider** | **Chemical** | **Grade** | **Zone 1 (°F)** | **Zone 2 (°F)** | **Zone 3 (°F)** | **Zone 4 (°F)** | **Die 1 (°F)** | **Die 2 (°F)** | **Die 3 (°F)** |
|---|---|---|---|---|---|---|---|---|---|
| Rowa Group USA | Azodicarbonamide | Large Particle Size | 360 | 370 | 390 | 400 | 350 | 350 | 370 |
| Rowa Group USA | Azodicarbonamide | Small Particle Size | 360 | 370 | 390 | 400 | 370 | 370 | 380 |
| Rowa Group USA | 5-Phenyltetrazole | IM 2240 | 380 | 390 | 400 | 410 | 360 | 360 | 380 |
| Chemtura | 5-Phenyltetrazole | Expandex 5-PT | 400 | 450 | 480 | 500 | 380 | 380 | 450 |
| Chemtura | p-toluenesulfonylsemicarbazide | Celogen RA | 390 | 410 | 440 | 460 | 400 | 400 | 440 |

### Example 8

KYNAR PVDF foam pipe was made using a 2.5" single screw extruder. A blend was used of 95% Kynar 760, which has a melting point of 165-172°C and a melt viscosity of 23.0-29.0 Kpoise, and a 5% master batch comprising of 5% monosodium citrate, 1% CaCO₃ with surface area of 22m²/g, and 94% Kynar 2501-20, which has a melting point of 117-123.5°C and melt viscosity of 6.0-15.0 Kpoise. The pipe was extruded through a three leg spider die to make schedule 40 1-1/2 pipe with 1.900" outside diameter, 0.145" wall thickness, and 1.610" inside diameter. The die draw balance was 1.246 and the draw down ratio was 0.943. The pipe was calibrated using a 1.950" sizer and two-stage water vacuum tank. Below (Table 11) are the processing conditions.

**Table 11**

| **Barrel 1 (°F)** | **Barrel 2 (°F)** | **Barrel 3 (°F)** | **Barrel 4 (°F)** | **Adapter (°F)** | **Clamp** | **Die 1 (°F)** | **Die 2 (°F)** | **Die 3 (°F)** | **Head Press. (psi)** | **Line Speed (ft/min)** | **Water Temp (°F)** | **Ext. Speed (RPM)** |
|---|---|---|---|---|---|---|---|---|---|---|---|---|
| 355 | 365 | 375 | 390 | 420 | 360 | 360 | 360 | 360 | 1340 | 2.4 | 90 | 15 |

The pipe had a density of 1.114 g/cc, which is a 38% density reduction, with very good inside and outside surface finish.

## Claims

1. A master batch concentrate for use in foaming a fluoropolymer comprising:
a) 5 to 99.99 weight percent of a carrier resin, having a melting temperature of 50 - 175°C or a Tg of from 50 - 110°C, wherein said carrier resin comprises a (meth)acrylic resin, a thermoplastic urethane (TPU) or a polyvinylidene fluoride (PVDF);
b) 0.01 to 95 weight percent of one or more nucleating agents based on the total polymer solids; and
c) optionally from 0.01 to 95 weight percent of one or more other additives.

2. The master batch of claim 1, further comprising from 0.1 to 95 weight percent of one or more solid blowing agents having a decomposition temperature of from 100 °C to 300°C.

3. The master batch of claim 1, wherein said master batch is in the form of a pellet or a powder.

4. The master batch of claim 1, wherein said carrier resin comprises a low- melting point PVDF copolymer.

5. The master batch of claim 4, wherein said PVDF copolymer comprises from 50 - 90 weight percent of vinylidene fluoride monomer units and 10 to 50 weight percent of hexafluoropropene units.

6. The master batch of claim 1, wherein said master batch is in the form of two or more different master batches having different compositions.

7. The master batch of claim 1, further comprising additives selected from the group consisting of impact modifiers, UV stabilizers, plasticizers, fillers, coloring agents, pigments, dyes, antioxidants, antistatic agents, surfactants, toner, pigments, and dispersing aids.

8. A process for the production of a sized fluoropolymer foam by means of the master batch concentrate according to any of claims 1 to 7, said process comprising the steps of:
a) blending said master batch concentrate(s) with at least one fluoropolymer resin at from 0.1 to 95 weight percent master batch to 5 to 99.9 weight percent fluoropolymer form a homogeneous fluoropolymer/master batch blend;
b) processing the fluoropolymer/master batch blend through an extruder to produce a homogeneous mixture of fluoropolymer, gas, and the components of the master batch;
c) cooling the fluoropolymer/gas mixture in the end of the extruder, adapter and/or die
d) extruding the fluoropolymer/gas mixture from the extruder to form a fluoropolymer foam; and
e) passing the fluoropolymer foam through a sizer to form a shaped fluoropolymer foam structure having a dense skin; and
f) cooling the resulting structure; and
g) optionally cutting the resulting cooled structure to a desired size.

9. The process of claim 8, wherein said fluoropolymer comprises polyvinylidene fluoride(PVDF).

10. The process of claim 8, wherein said master batch further comprises a blowing agent at from 1-95% by weight, based on the total polymer solids.

11. The process of claim 8, wherein said master batch (a) comprises from 0.5 to 20% nucleating agent and from 1 to 20 weight percent blowing agent, based on the weight ofpolymer solids.

12. The process of claim 8, wherein said blending of master batch and fluoropolymer occurs in a single screw extruder.

13. The process of claim 8, wherein said extruder comprises a single screw extruder, a twin screw extruder, a blow molder or an injection molder.
